# EUROPEAN PATENT SPECIFICATION

(11) **EP 2 822 390 B1**
(45) Date of publication and mention of the grant of the patent: **09.12.2015**
(21) Application number: 13716828.2
(22) Date of filing: 01.03.2013
(51) Int. Cl.: A23B 4/28, A22C 17/00

(54) **INJECTING MACHINE FOR INJECTING BRINE INTO MEAT PIECES**
EINSPRITZMASCHINE ZUM EINSPRITZEN VON PÖKEL IN FLEISCHSTÜCKE
MACHINE D'INJECTION POUR INJECTER DE LA SAUMURE DANS DES MORCEAUX DE VIANDE

(30) Priority: 05.03.2012 US 201213411899
(43) Date of publication of application: 14.01.2015
(73) Proprietor: Metalquimia, SA, 17007 Girona (ES)
(72) Inventor: LAGARES COROMINAS, Narcís, E-17850 Besalú (Girona) (ES)
(74) Representative: Juncosa Miro, Jaime
(86) International application number: PCT/IB2013/000372
(87) International publication number: WO 2013/132310

(56) References cited:
- DE-U- 7 529 131
- GB-A- 2 127 274
- US-A1- 2005 196 496

## Description

### Technical Field

The present invention generally relates to an injecting machine for injecting brine into meat pieces and more in particular to an injecting machine having two or more injection heads for consecutively injecting brine into meat pieces conveyed on a conveyor.

### Background of the Invention

U.S. Patent No. 6901850 discloses an injection head for an injecting machine intended for injecting brine to meat pieces on a support surface of a meat conveyor. The injection head comprises a main body and a plurality of parallel hollow needles that can be retracted with respect to the main body against elastic means acting on an upper end of each needle opposite the tip thereof. In the injecting machine, the head is actuated by driving means to vertically reciprocate between an upper position, in which the tip of said needles is at a distance from the support surface of the conveyor sufficient for enabling the meat pieces to pass under the injection heads, and a lower position, in which said lower needle portions of the needles are stuck into the meat pieces located under the injection heads. Brine supplying means are provided for supplying brine to an inlet opening of each needle when the injection heads are in said lower position.

It is also known to provide an injecting machine with two or more injection heads of the type described above installed at the same level over the support surface of the conveyor for consecutively injecting brine to meat pieces on the support surface of the conveyor in order to increase the amount of total brine injected into each meat piece. However, due to the fact that the volume of a meat piece increases significantly when brine is injected therein, in some instances a particular meat piece previously injected by the first injection head in relation to a conveyor forward direction cannot pass under the second injection head due to the volume increase undergone with the first brine injection. To solve this, the injection heads would need to have an enlarged stroke length between their upper and lower positions with increased manufacturing costs.

### Disclosure of the Invention

The present invention contributes to solve the aforementioned and other drawbacks by providing an injecting machine for injecting brine into meat pieces comprising a conveyor having a support surface for conveying meat pieces in a forward direction, and at least first and second injection heads consecutively arranged relative to said conveyor in said forward direction. Each of said first and second injection heads has a plurality of parallel hollow needles mounted thereon, and each needle has a longitudinal inner passage, at least one inlet opening in communication with said inner passage at an upper needle portion and a plurality of outlet openings in communication with the inner passage distributed along a lower needle portion. The injecting machine further comprises head driving means for reciprocating said first and second injection heads between an upper position, in which the tip of said needles is at a distance from said support surface of said conveyor sufficient for enabling the meat pieces to pass under the injection heads, and a lower position, in which said lower needle portions of the needles are stuck into the meat pieces located under the injection heads, and brine supplying means for supplying brine to said inlet opening of the needles at least when the first and second injection heads are in said lower position.

The mentioned head driving means are arranged for alternately reciprocating said first and second injection heads so that when one of them is at said upper position the other one is at the lower position, and vice versa, and the first and second injection heads are installed at different heights over the conveyor so that the upper position of the first injection head is at a lower level in comparison with the upper position of the second injection head.

The upper position of the first injection head and the upper position of the second injection head are separated by an offset distance selected to enable the meat pieces previously injected by the first injection head to pass under the second injection head when it is in its upper position in spite of the volume increase undergone by the meat pieces due to the first brine injection, especially when the injection is intensive.

Both the first and second injection heads have substantially a same stroke length between their upper and lower positions so that said offset distance is also present between the lower position of the first injection head and the lower position of the second injection head. Preferable, when the first injection head is at its lower position the tips of the needles thereof are very close to the support surface of the conveyor, and as a result, when the second injection head is at its lower position the tips of the needles thereof are at said offset distance over the support surface of the conveyor. Preferably, the offset distance is selected to make the levels at which said outlet openings of the needles of the first injection head are positioned do not coincide with the levels at which the outlet openings of the needles of the second injection head are positioned when the first and second injection head are at their lower positions, so that brine is injected into the meat pieces by the second injection head at different levels than brine injected by the first injection head.

In the injection machine of the present invention, the first and second injection heads can be mutually identical. For example, injection heads of the type described in the cited U.S. Patent No. 6901850 or similar can be used as the first and second injection heads.

In one embodiment, the head driving means are configured to maintain at least one of the first and second injection heads at its lower position for a predetermined period of time and said brine supplying means are configured to supply brine to the needles of that injection head during said predetermined period of time and also during a portion of the backward movement of the injection head from its lower positions to the upper position. The supply of brine is stopped when the injection head reaches an injection final position intermediate between the lower position and the upper position.

Obviously, said injection final position is selected so that a lower portion of the needles is still stuck into the meat piece being injected and all or the most of the outlet openings of the needles are within the meat piece, considering a meat piece average size, when the injection head is at the injection final position. Preferably, the head driving means are configured to move the corresponding injection head from its lower position to its injection final position at a slow motion and from its injection final position to its upper position at a fast motion. With this features, injected brine is evenly spread into the meat piece.

Preferably, the plurality of outlet openings of each needle are separated from one another in the longitudinal direction by an outlet opening distance, and the lower position and the injection final position are separated from one another in the head moving direction by an injection distance which is less than said opening distance. This also contributes to evenly spread the injected brine throughout the meat piece being injected. In one embodiment, the mentioned injection distance equals substantially a half of said outlet opening distance, and in another embodiment the injection distance is only a little less than the outlet opening distance.

It is to be understood that the feature of injecting brine during the predetermined period of time when the injection head is maintained at its lower position and also during a slow motion portion of the backward movement of the injection head from its lower position to its injection final position is also applicable to an injecting machine having a single injection head or two or more injection heads installed at the same level over the support surface of the conveyor.

### Brief Description of the Drawing

The above and other features and advantages will be more apparent from the following detailed description of an exemplary embodiment with reference to the attached drawings, in which:
Fig. 1 is a diagrammatic side view of an injecting machine for injecting brine into meat pieces according to one embodiment of the present invention, wherein first and second injection heads are both shown while not operative at their upper positions to better illustrate a main feature in spite of being a non-operative situation;
Fig. 2 is a diagrammatic partial side view of the injecting machine in an operative situation with the first injection head at its lower position and the second injection head at its upper position;
Fig. 3 is a diagrammatic partial side view of the injecting machine in another operative situation with the first injection head at its upper position and the second injection head at its lower position;
Fig. 4 is an enlarged diagrammatic partial side view of lower portions of the needles of one of the injection heads stuck into a meat piece when the injection head is at the lower position; and
Fig. 5 is an enlarged diagrammatic partial side view similar to Fig. 4 when the injection head is at an injection final position between the lower position and the upper position.

### Detailed Description of an Exemplary Embodiment

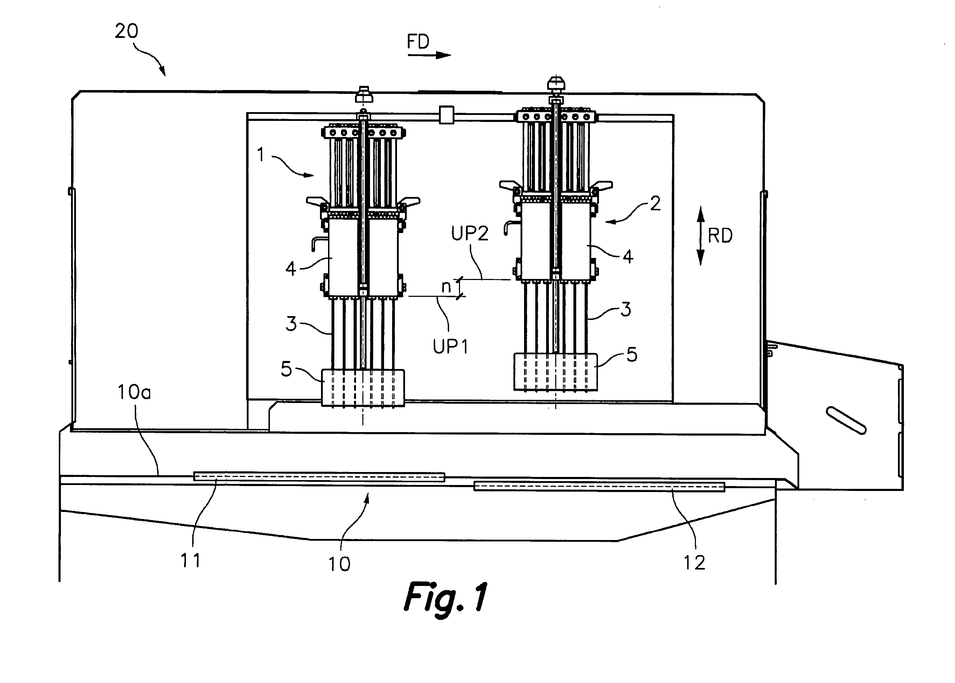

Referring first to Fig. 1, the reference sign 20 generally designates an injecting machine for injecting brine into meat pieces according to one exemplary embodiment of the present invention. The injecting machine 20 comprises a conveyor 10 having a support surface 10a for conveying meat pieces in a forward direction FD, and first and second injection heads 1, 2 arranged one after the other over said conveyor 10 relative to said forward direction FD.

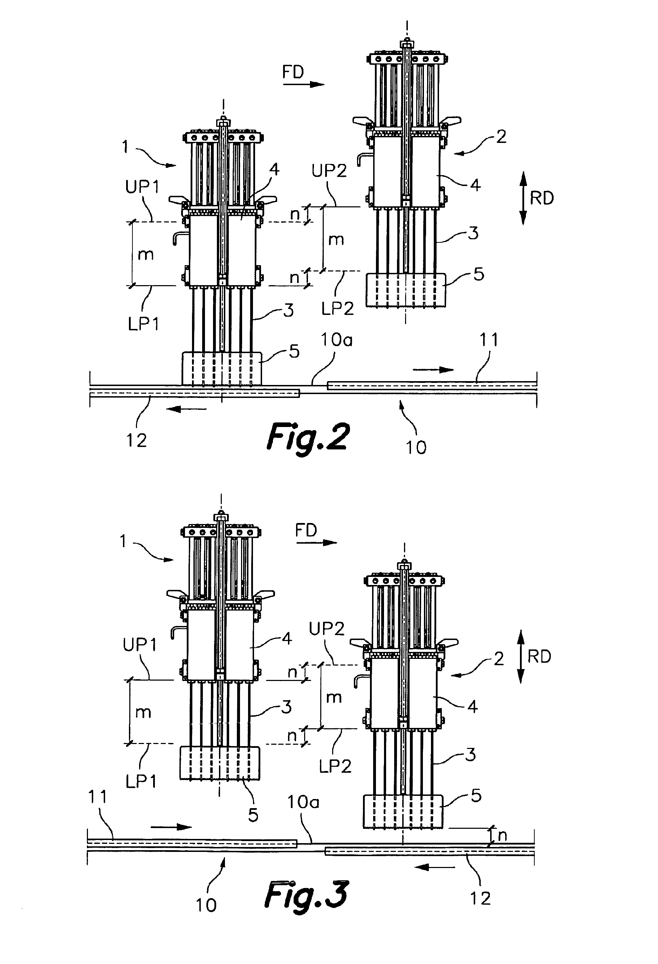

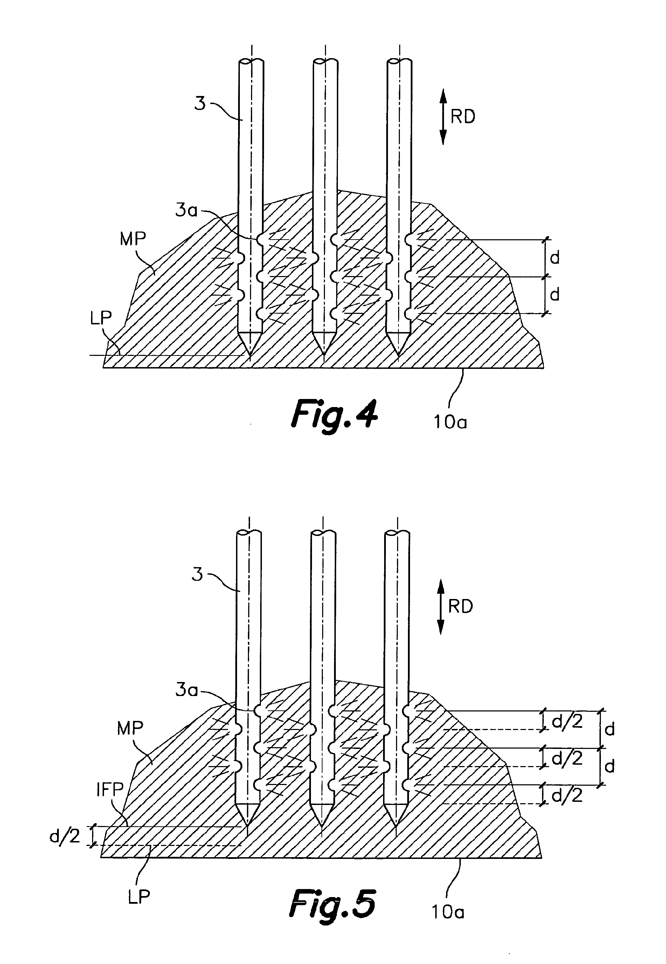

The first and second injection head 1, 2 are identical, and each of them has a plurality of parallel hollow needles 3 mounted on a main body 4. As conventional, each needle 3 has a longitudinal inner passage, at least one inlet opening in communication with said inner passage at an upper needle portion and a plurality of outlet openings 3a (Figs. 3 and 4) in communication with the inner passage distributed at regular distances d along a lower needle portion.

The main bodies 4 of the first and second injection heads 1, 2 are connected to head driving means (not shown) configured to vertically reciprocate the first and second injection heads 1, 2 between respective upper positions UP1, UP2 (Figs. 1-3), in which the tips of needles 3 are at a distance from said support surface 10a of the conveyor 10 sufficient for enabling the meat pieces to pass under the injection heads 1, 2, and a lower position LP1, LP2 (Figs. 2-5), in which said lower needle portions of the needles 3 are stuck into the meat pieces located under the injection heads 1, 2. Both first and second injection heads 1, 2 are shown at their upper positions in Fig. 1. The vertical reciprocating direction is perpendicular to the forward direction FD and is indicated by means of a double arrow RD in the Figures.

Each of the first and second injection heads 1, 2 further comprises a conventional hold-down plate 5 having a plurality of openings through which the needles 3 are inserted. The hold-down plate 5 is connected by elastic means to the main body 4 so that the hold-down plate 31 can be retracted to the main body 4 by the meat piece when the corresponding first or second injection head 1, 2 is at its lower position LP1, LP2 and the needles 3 are stuck into the meat piece. The hold-down plate 5 aids to release the stuck meat piece when the injection head is moved back to its upper position. Also as conventional, the needles are arranged so that they can be individually retracted with respect to the main body against elastic means acting on an upper end of each needle opposite the tip thereof, for example in the case of the needle touches a hard portion, as for example a bone, when sticks into the meat piece.

The injecting machine 20 further comprises brine supplying means (not shown) for supplying brine to said inlet opening of the needles 3 at least when the first and second injection heads 1, 2 are in said lower position LP1, LP2 in order to inject brine into the meat piece through the outlet openings 3a of the needles 3 (Figs. 4 and 5).

As shown in Figs. 2 and 3, in operation the head driving means are actuated to alternately reciprocate said first and second injection heads 1, 2 between their upper and lower positions, so that when the first injection head 1 is at its lower position LP1 the second injection head is at its upper position UP2 (Fig. 2), and vice versa, when the first injection head 1 is at its upper position UP1 the second injection head is at its lower position LP2 (Fig. 3). In Figs. 2 and 3, the upper positions UP1, UP2 and lower positions LP1, LP2 for each of the first and second injection heads 1, 2 are indicated taking as a reference the level of the lower end of the respective main bodies 4. In Fig. 2, the upper position UP1 of the first injection head 1 and the lower position LP2 of the second injection head 2 are indicated with dashed reference lines. Inversely, in Fig. 3, the lower position LP1 of the first injection head 1 and the upper position UP2 of the second injection head 2 are indicated with dashed reference lines.

The conveyor 10 has two advancing units 11, 12 which are actuated in a known manner for intermittently advancing the meat pieces step by step in the forward direction FD according to the reciprocating movements of the first and second injection heads 1, 2 so that the meat pieces are stopped on the support surface 10a of the conveyor 10 when they are stuck and injected by the needles 3 of the first and second injection heads 1, 2.

For example, as well known in the art, the support surface 10a of the conveyor 10 is provided by a plurality of stationary support bars arranged parallel to the forward direction FD, and each advancing unit 11, 12 comprises a plurality of advancing elements arranged intermediate the support bars and actuated to move between an upper position, in which the advancing elements protrude upwards from the top of the support bars (see on the left hand in Fig. 1), thus engaging the meat pieces, and a lower position, in which the advancing elements are at a lower level with respect to the support bars (see on the right hand in Fig. 1), thus leaving the meat pieces on the stationary support bars, and also to move in the forward direction FD when they are in the lower position and to move in an opposed backward direction when they are in the lower position.

Obviously, the two advancing units 11, 12 are alternately operated so that while the first injection head 1 is at its lower position and the second injection head 2 is at its upper position (Fig. 2) the first advancing unit 11, which is located below the first injection head 1, is at its lower position and moving backwards so that the meat pieces located under the first injection head 1 are sopped, and the second advancing unit 12, which is located below the second injection head 2, is at its upper position and moving forwards so that the meat pieces located under the second injection head 2 are being advanced. Fig. 3 shows the inverse situation.

The first and second injection heads 1, 2 are installed in the injecting machine 20 at different heights over the conveyor 10 so that the upper position UP1 of the first injection head 1 is at a lower level in comparison with the upper position UP2 of the second injection head 2. More in particular, the upper position UP1 of the first injection head 1 and the upper position UP2 of the second injection head 2 are separated by an offset distance n, which is selected to enable the meat pieces previously injected by the first injection head 1 to pass under the second injection head 2 when it is in its upper position UP2 in spite of having increased its volume due to the first brine injection, especially when injection has been intensive.

The mentioned offset distance n is more clearly shown in Fig. 1, wherein the first and second injection heads 1, 2 are shown both in their upper positions UP1, UP2 in spite of being a non-operative situation.

As the first and second injection head 1, 2 are identical, they have substantially a same stroke length m between the upper position UP1, UP2 and the lower position LP1, LP2, and this makes that the offset distance n is also present between the lower position LP1 of the first injection head 1 and the lower position LP2 of the second injection head 2. When the first injection head 1 is at its lower position LP1, the tips of the needles 3 thereof are very close to the support surface 10a of the conveyor 10 as shown in Fig. 2, and therefore, when the second injection head 2 is at its lower position LP2, the tips of the needles 3 thereof are substantially at said offset distance n over the support surface 10a of the conveyor 10.

The offset distance n is advantageously selected so that the levels at which the outlet openings 3a of the needles 3 of the first injection head 1 are positioned do not coincide with the levels at which the outlet openings 3a of the needles 3 of the second injection head 2 are positioned when the first and second injection head 1, 2 are at their respective lower positions LP1, LP2 in order to more evenly spread the injected brine throughout the meat piece.

Referring now to Figs. 4 and 5, the head driving means are configured to maintain each injection head (only the lower portion of a few needles 3 of one of which is shown in Figs. 4 and 5) at its lower position LP for a predetermined period of time, and then move at a slow motion the injection head from the lower position LP to an injection final position IFP lower than the upper position, and finally move at a fast motion the injection head from said injection final position IFP to its upper position (not shown in Figs. 4 and 5). The brine supplying means are configured for supplying brine to the inlet opening of the needles 3 of the injection head during said predetermined period of time when it remains at the lower position LP and also during the slow motion portion of the backward movement of the injection head from the lower position LP to the injection final position IFP. When the injection final position IFP is reached, the brine supplying means stop to supply brine to the needles 3 and the head driving means speed up to move the injection head up to the upper position with a fast motion.

Fig. 4 shows the lower portion of only a few needles 3 of one of the injection heads stuck in a meat piece MP when the injection head is in its lower position LP and brine is injected from the outlet openings 3a, and Fig. 5 shows the lower portion of the same needles 3 still stuck in the meat piece MP but after the injection head has been moved from the lower position LP to the injection final position IFP and when brine is about of being stopped to be injected from the outlet openings 3a. In Fig. 5, the level of lower position LP and the levels of the outlet openings 3a when the injection head was at the lower position LP is indicated with dashed reference lines.

Note that the injection final position IFP is selected so that the lower portion of the needles 3 where the outlet openings 3a are formed is still stuck into the meat piece MP being injected so that all or the most of the outlet openings 3a of the needles 3 are still within the meat piece MP, considering a meat piece average size, when the injection head reaches the injection final position IFP.

The plurality of outlet openings 3a are arranged along each needle 3 at an outlet opening distance d from one another in the longitudinal direction thereof, and the injection final position IFP is distanced from the lower position LP in the needle longitudinal direction an injection distance d/2 which substantially equals a half of said outlet opening distance d, with the result of brine injected from the outlet openings 3a of the needles 3 being substantially evenly spread throughout the meat piece MP. In an alternative embodiment (not shown), said injection distance is preferably comprised between a half of the outlet opening distance d and the outlet opening distance d, for example a little less than outlet opening distance d. In another alternative embodiment (not shown), the injection distance is less than a half of the outlet opening distance d.

It is to be understood that for the sake of clarity only one row of longitudinally aligned outlet openings 3a arranged at one side of the needles 3 is shown in Figs. 4 and 5. However, actually there are usually a plurality of rows of longitudinally aligned outlet openings 3a arranged at different sides of the needles 3, and the outlet openings 3a of the different rows are usually arranged at different levels.

Modifications and variations to the exemplary embodiment shown and described will readily occur to a person skilled in the art without departing from the scope of the present invention as it is defined in the attached claims.

## Claims

1. An injecting machine for injecting brine into meat pieces comprising:
a conveyor (10) having a support surface (10a) for conveying meat pieces in a forward direction (FD);
at least first and second injection heads (1, 2) consecutively arranged over said conveyor (10) relative to said forward direction (FD);
a plurality of parallel hollow needles (3) mounted on each first and second injection head (1, 2), each needle (3) having a longitudinal inner passage, at least one inlet opening in communication with said inner passage at an upper needle portion and a plurality of outlet openings (3a) in communication with the inner passage distributed along a lower needle portion;
head driving means for reciprocating said first and second injection heads (1, 2) between an upper position (UP1, UP2), in which the tip of said needles (3) is at a distance from said support surface (10a) of said conveyor (10) sufficient for enabling the meat pieces to pass under the injection heads (1, 2), and a lower position (LP1, LP2), in which said lower needle portions of the needles (3) are stuck into the meat pieces located under the injection heads (1, 2); and
brine supplying means for supplying brine to said inlet opening of the needles (3) at least when the first and second injection heads (1,2) are in said lower position (LP1, LP2);
wherein said head driving means are arranged for alternately reciprocating said first and second injection heads (1, 2) so that when one of them is at said upper position (UP1, UP2) the other one is at the lower position (LP1, LP2), and vice versa; and
the first and second injection heads (1, 2) are installed at different heights over the conveyor (10) so that the upper position (UP1) of the first injection head (1) is at a lower level in comparison with the upper position (UP2) of the second injection head (2).

2. The injecting machine according to claim 1, wherein an offset distance (n) between the upper position (UP1) of the first injection head (1) and the upper position (UP2) of the second injection head (2) is selected enabling the meat pieces previously injected by the first injection head (1) to pass under the second injection head (2) when it is in its upper position (UP2).

3. The injecting machine according to claim 2, wherein a stroke length (m) between the upper and lower positions (UP1, UP2; LP1, LP2) of both first and second injection heads (1, 2) is substantially the same so that said offset distance (n) is also present between the lower position (LP1) of the first injection head (1) and the lower position (LP2) of the second injection head (2).

4. The injecting machine according to claim 3, wherein the offset distance (n) is selected making the levels at which said outlet openings (3a) of the needles (3) of the first injection head (1) are positioned do not coincide with the level at which the outlet openings (3a) of the needles (3) of the second injection head (2) are positioned when the first and second injection head (1, 2) are at their lower positions (LP1, LP2).

5. The injecting machine according to claim 1, wherein said head driving means are configured to maintain at least one of the first and second injection heads (1, 2) at its lower position (LP) for a predetermined period of time and said brine supplying means are configured to supply brine to the needles (3) of that injection head (1,2) during said predetermined period of time and during a portion of the backward movement of that injection head (1, 2) from its lower position (LP) to and injection final position (IFP) lower than the upper position.

6. The injecting machine according to claim 5, wherein the head driving means are configured to move said at least one injection head (1, 2) from the lower position (LP) to said injection final position (IFP) at a slow motion and from the injection final position (IFP) to the upper position at a fast motion.

7. The injecting machine according to claim 6, wherein said plurality of outlet openings (3a) are arranged at an outlet opening distance (d) from one another in the longitudinal direction of the needle (3), and an injection distance from the lower position (LP) to the injection final position (IFP) is less than said opening distance (d).

8. The injecting machine according to claim 7, wherein said injection distance (d/2) from the lower position (LP) to said injection final position (IFP) is substantially a half of said outlet opening distance (d).

## Patentansprüche

1. Einspritzmaschine zum Einspritzen von Pökel in Fleischstücke, umfassend:
ein Fördermittel (10), welches eine Tragfläche (10a) zum Befördern von Fleischstücken in Vorwärtsrichtung (FD) aufweist;
zumindest einen ersten Einspritzkopf (1) und einen zweiten Einspritzkopf (2), welche nacheinander über dem genannten Fördermittel (10) in Bezug auf die genannte Vorwärtsrichtung (FD) angeordnet sind;
eine Vielzahl von parallelen hohlen Nadeln (3), welche auf jedem des ersten Einspritzkopfes (1) und des zweiten Einspritzkopfes (2) montiert sind, wobei jede Nadel (3) einen longitudinal inneren Durchgang, zumindest eine Eingangsöffnung in Verbindung mit dem genannten inneren Durchgang an einem oberen Nadelteil und eine Vielzahl von Ausgangsöffnungen (3a) in Verbindung mit dem inneren Durchgang, welche entlang eines unteren Nadelteils verteilt sind, aufweist;
Kopfbetätigungsmittel zum Hin- und Herbewegen des genannten ersten Einspritzkopfes (1) und des genannten zweiten Einspritzkopfes (2) zwischen einer oberen Stellung (UP1, UP2), in welcher sich die Spitze der genannten Nadeln (3) in einem Abstand zur genannten Tragfläche (10a) des genannten Fördermittels (10) befindet, die ausreicht, um zu ermöglichen, dass die Fleischstücke unter den Einspritzköpfen (1, 2) gehen, und einer unteren Stellung (LP1, LP2), in welcher sich die genannten unteren Nadelteile der Nadeln (3) in die Fleischstücke hineinstecken, welche sich unter den Einspritzköpfen (1, 2) befinden; und
Pökelversorgungsmittel zur Versorgung der genannten Eingangsöffnung der Nadeln (3) von Pökel, zumindest wenn sich der erste Einspritzkopf (1) und der zweite Einspritzkopf (2) in der genannten unteren Stellung (LP1, LP2) befindet;
wobei die genannten Kopfbetätigungsmittel dazu angeordnet sind, um den genannten ersten Einspritzkopf (1) und den genannten zweiten Einspritzkopf (2) alternativ hin- und herzubewegen, so dass wenn sich einer derselben in der genannten oberen Stellung (UP1, UP2) befindet, sich der andere in der unteren Stellung (LP1, LP2) befindet, und umgekehrt; und
der erste Einspritzkopf (1) und der zweite Einspritzkopf (2) auf unterschiedlichen Höhen über dem Fördermittel (10) installiert sind, so dass sich die obere Stellung (UP1) des ersten Einspritzkopfes (1) auf einem unteren Niveau im Vergleich zu der oberen Stellung (UP2) des zweiten Einspritzkopfes (2) befindet.

2. Einspritzmaschine nach Anspruch 1, wobei ein Versatzabstand (n) zwischen der oberen Stellung (UP1) des ersten Einspritzkopfes (1) und der oberen Stellung (UP2) des zweiten Einspritzkopfes (2) ausgewählt wird, welches ermöglicht, dass die Fleischstücke, die zuvor von dem ersten Einspritzkopf (1) eingespritzt wurden, unter den zweiten Einspritzkopf (2) gehen, wenn er sich in seiner oberen Stellung (UP2) befindet.

3. Einspritzmaschine nach Anspruch 2, wobei eine Hublänge (m) zwischen der oberen Stellung (UP1, UP2) und der unteren Stellung (LP1, LP2) von jeweils dem ersten Einspritzkopf (1) und dem zweiten Einspritzkopf (2) wesentlich dieselbe ist, so dass der genannte Versatzabstand (n) ebenso zwischen der unteren Stellung (LP1) des ersten Einspritzkopfes (1) und der unteren Stellung (LP2) des zweiten Einspritzkopfes (2) vorhanden ist.

4. Einspritzmaschine nach Anspruch 3, wobei der Versatzabstand (n) ausgewählt wird, indem die Ausgestaltung so ist, dass die Niveaus, auf welchen die genannten Ausgangsöffnungen (3a) der Nadeln (3) des ersten Einspritzkopfes (1) positioniert werden, nicht mit dem Niveau übereinstimmen, auf welchem die Ausgangsöffnungen (3a) der Nadeln (3) des zweiten Einspritzkopfes (2) positioniert werden, wenn sich der erste Einspritzkopf (1) und der zweite Einspritzkopf (2) auf seine untere Stellung (LP1, LP2) befindet.

5. Einspritzmaschine nach Anspruch 1, wobei die genannten Kopfbetätigungsmittel so ausgebildet sind, dass sie zumindest einen des ersten Einspritzkopfes (1) und des zweiten Einspritzkopfes (2) auf seiner unteren Stellung (LP) während eines bestimmten Zeitraums halten und die genannten Pökelversorgungsmittel so ausgebildet sind, dass sie den Nadeln (3) von diesem Einspritzkopf (1, 2) während des genannten bestimmten Zeitraums und während eines Teils der Rückwärtsbewegung von diesem Einspritzkopf (1, 2) von seiner unteren Stellung (LP) zu einer Einspritzendstellung (IFP), die tiefer als die obere Stellung ist, Pökel versorgen.

6. Einspritzmaschine nach Anspruch 5, wobei die Kopfbetätigungsmittel so ausgebildet sind, dass sie den genannten zumindest einen Einspritzkopf (1, 2) von der unteren Stellung (LP) zur genannten Einspritzendstellung (IFP) mit einer langsamen Bewegung und von der Einspritzendstellung (IFP) zur oberen Stellung mit einer schnellen Bewegung bewegen.

7. Einspritzmaschine nach Anspruch 6, wobei die genannte Vielzahl von Ausgangsöffnungen (3a) in einem Ausgangsöffnungsabstand (d) voneinander in der longitudinalen Richtung der Nadel (3) angeordnet ist und ein Einspritzabstand von der unteren Stellung (LP) zur Einspritzendstellung (IFP) kleiner als der genannte Öffnungsabstand (d) ist.

8. Einspritzmaschine nach Anspruch 7, wobei der genannte Einspritzabstand (d/2) von der unteren Stellung (LP) zur genannten Einspritzendstellung (IFP) wesentlich die Hälfte des genannten Ausgangsöffnungsabstands (d) ist.

## Revendications

1. Machine d'injection pour injecter de la saumure dans des morceaux de viande comprenant:
un transporteur (10) ayant une surface de support (10a) pour transporter des morceaux de viande dans une direction avant (FD);
au moins des première et deuxième têtes d'injection (1, 2) consécutivement arrangées sur ledit transporteur (10) par rapport à ladite direction avant (FD);
une pluralité d'aiguilles creuses parallèles (3) montées sur chaque première et deuxième tête d'injection (1, 2), chaque aiguille (3) ayant un passage longitudinal interne, au moins une ouverture d'entrée en communication avec ledit passage interne dans une portion d'aiguille supérieure et une pluralité d'ouvertures de sortie (3a) en communication avec le passage interne distribuées au long d'une portion d'aiguille inférieure,
des moyens d'entraînement de tête pour faire osciller lesdites première et deuxième têtes d'injection (1, 2) entre une position supérieure (UP1, UP2) dans laquelle la pointe desdites aiguilles (3) est à une distance de ladite surface de support (10a) dudit transporteur (10) suffisante pour permettre aux morceaux de viande de passer sous les têtes d'injection (1, 2) et une position inférieure (LP1, LP2), dans laquelle lesdites portions des aiguille inférieures des aiguilles (3) sont enfoncées dans les morceaux de viande situés en dessous des têtes d'injection (1, 2); et
des moyens de fourniture de la saumure pour fournir de la saumure à ladite ouverture d'entrée des aiguilles (3) au moins lorsque les première et deuxième têtes d'injection (1, 2) sont dans ladite position inférieure (LP1, LP2);
dans laquelle lesdits moyens d'entraînement de tête sont arrangés pour faire osciller de façon alternante lesdites première et deuxième têtes d'injection (1, 2) de façon à ce que lorsque une d'entre elles est dans ladite position supérieure (UP1, UP2) l'autre est dans la position inferieure (LP1, LP2), et vice versa; et
les première et deuxième têtes d'injection (1, 2) sont installées à une hauteur différente sur le transporteur (10) de façon à ce que la position supérieure (UP1) de la première tête d'injection (1) est à un niveau inférieur en comparaison avec la position supérieure (UP2) de la deuxième tête d'injection (2).

2. Machine d'injection selon la revendication 1, dans laquelle une distance de décalage (n) entre la position supérieure (UP1) de la première tête d'injection (1) et la position supérieure (UP2) de la deuxième tête d'injection (2) est sélectionnée permettant aux morceaux de viande injectés préalablement par la première tête d'injection (1) de passer sous la tête d'injection (2) lorsqu'elle est dans sa position supérieure (UP2).

3. Machine d'injection selon la revendication 2, dans laquelle une longueur de course (m) entre les positions supérieure et inférieure (UP1, UP2 ; LP1, LP2) des première et deuxième têtes d'injection (1, 2) est substantiellement la même de façon à ce que ladite distance de décalage (n) est aussi présente entre la position inférieure (LP1) de la première tête d'injection (1) et la position inférieure (LP2) de la deuxième tête d'injection (2).

4. Machine d'injection selon la revendication 3, dans laquelle la distance de décalage (n) est choisie de sorte que les niveaux auxquelles sont situées lesdites ouvertures de sortie (3a) des aiguilles (3) de la première tête d'injection (1) ne coïncident pas avec le niveau auquel sont situées les ouvertures de sortie (3a) des aiguilles (3) de la deuxième tête d'injection (2) lorsque les première et deuxième têtes d'injection (1, 2) sont dans leurs positions inférieures (LP1, LP2).

5. Machine d'injection selon la revendication 1, dans laquelle lesdits moyens d'entraînement de tête sont configurés pour maintenir au moins une des première et deuxième têtes d'injection (1, 2) dans sa position inférieure (LP) pendant une période de temps prédéterminée et lesdits moyens de fourniture de la saumure sont configurés pour fournir de la saumure aux aguilles (3) de cette tête d'injection (1, 2) pendant ladite période de temps prédéterminée et pendant un portion du mouvement de retour de cette tête d'injection (1, 2) de sa position inférieure (LP) à une position finale d'injection (IFP) plus basse que la position supérieure.

6. Machine d'injection selon la revendication 5, dans laquelle les moyens d'entraînement de tête sont configurés pour déplacer ladite au moins une tête d'injection (1, 2) de la position inférieure (LP) à ladite position finale d'injection (IFP) avec un mouvement ralenti et de la position finale d'injection (IFP) à la position supérieure avec un mouvement accéléré.

7. Machine d'injection selon la revendication 6, dans laquelle ladite pluralité d'ouvertures de sortie (3a) sont arrangées à une distance d'ouverture de sortie (d) les unes des autres dans la direction longitudinale de l'aiguille (3), et une distance d'injection de la position inférieure (LP) à la position finale de l'injection (IFP) est moins que ladite distance d'ouverture (d).

8. Machine d'injection selon la revendication 7, dans laquelle ladite distance d'injection (d/2) de la position inférieure (LP) à ladite position finale d'injection (IFP) est substantiellement la moitié de ladite distance d'ouverture de sortie (d).
